# FASCICULE DE BREVET EUROPEEN

(11) **EP 0 786 581 B1**
(45) Date de publication et mention de la délivrance du brevet: **29.11.2000**
(21) Numéro de dépôt: 97400144.8
(22) Date de dépôt: 23.01.1997
(51) Int. Cl.: F01D 5/14, F01D 21/04, F01D 11/00, F01D 5/30

(54) **Aube mobile de soufflante à profil de sécurité**
Bläserrotorschaufel mit einem Sicherheitsprofil
Fan rotor blade having a safety profile

(30) Priorité: 23.01.1996 FR 9600707
(43) Date de publication de la demande: 30.07.1997
(73) Titulaire: Snecma Moteurs, 75015 Paris (FR)
(72) Inventeur: Bussonnet, Pierre Xavier, 94370 Sucy en Brie (FR); Stenneler, Jacques Marie Pierre, 77820 le Chatelet en Brie (FR); Surdi, Jean Marc, 77950 Rubelles (FR)

(56) Documents cités:
- FR-A- 2 289 727
- GB-A- 2 064 667
- US-A- 5 443 365

## Description

### DOMAINE DE L'INVENTION

L'invention concerne le domaine des soufflantes, par exemple celles utilisées dans les compresseurs de soufflage de l'air, mais plus particulièrement celles utilisées dans les turboréacteurs à double flux.

### ART ANTERIEUR ET PROBLEME POSE

Dans les turboréacteurs à double flux, tels que ceux utilisés sur les avions, la soufflante se trouve à l'entrée de la machine. Elle sert à la fois de premier étage du compresseur et d'étage principal pour le deuxième flux. Elle est généralement carénée à l'extérieur, ce carénage délimitant l'extérieur de l'avant de ce turboréacteur. En d'autres termes, la base des pales fixées au moyeu du rotor fournit le flux nécessaire à l'entrée du compresseur, tandis que le reste de la pale fournit l'énergie de propulsion du second flux.

Compte tenu des très grandes vitesses de rotation du rotor d'un turboréacteur, les pales du turboréacteur, et en particulier celles de la soufflante, sont soumises à des contraintes mécaniques extrêmement importantes, notamment radialement, du fait de la force centrifuge. Ainsi, il est déjà arrivé qu'une aube se brise ou se détache du rotor de la soufflante pendant le fonctionnement de la turbomachine. Cette aube est donc susceptible d'endommager les parties du moteur qui lui sont adjacentes, notamment la pale suivante.

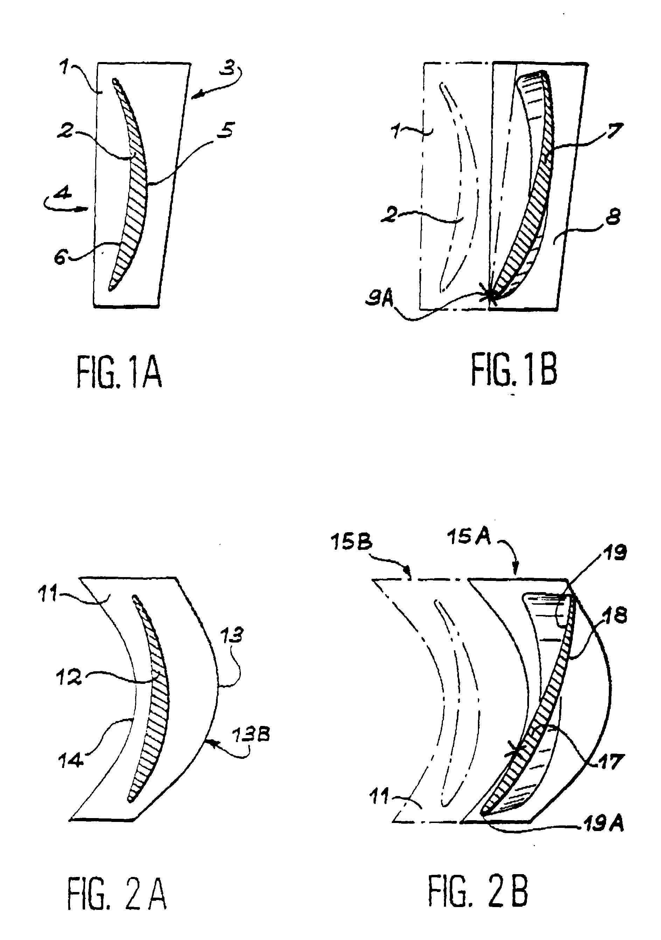

La figure 1A montre, en vue de dessus et en coupe une aube de rotor de soufflante du type à plate-forme. On distingue donc une plate-forme 1, placée à la base de l'aube, entre le pied, qui est caché sur cette figure et la pale 2 qui se trouve coupée dans sa section. On distingue le côté extrados 3 de l'aube et le côté intrados 4. La face extrados 5 de la pale n'agit pratiquement pas sur le flux d'air et se trouve en sous-pression, tandis que la face intrados 6 est complètement opérationnelle, puisque c'est elle qui refoule l'air du flux traversant le turboréacteur.

On remarque que la plate-forme 1 est relativement proéminente. De ce fait, et en référence à la figure 1B, lorsque l'aube vient à se détacher du rotor pour des questions de faiblesse en résistance mécanique, et que la plate-forme 1 se détache également, celle-ci a tendance à venir frapper la pale adjacente 7. De plus, comme celle-ci a un profil évolutif radialement par rapport à l'axe de rotation du rotor et que sa section s'incline de plus en plus par rapport à l'orientation générale de sa plate-forme 8, la plate-forme 1 de l'aube qui vient de se détacher frappe la pale suivante 7 sur son bord d'attaque 9A, en un point d'impact représenté par une croix. Il s'ensuit que ce choc a tendance à provoquer la cassure de cette deuxième pale 7, un tel bord d'attaque 9A constituant une amorce de fêlure, de fissure ou de cassure pour une pale métallique telle que celles utilisées dans les soufflantes de turboréacteur.

On conçoit ainsi que ce type d'incident mécanique peut provoquer, non seulement la cassure de la pale suivante, mais une série de cassures en chaîne, d'une pale à l'autre, et un endommagement général de la soufflante du turboréacteur. Une telle éventualité est donc à éviter pour les avioneurs et en particulier pour les constructeurs de turboréacteurs.

En conséquence, le but de la présente invention est de remédier à cet inconvénient de risque de détérioration d'une ou de plusieurs pales d'une soufflante de turboréacteur.

A cet effet, l'objet principal de l'invention est une aube mobile de rotor de soufflante d'axe de rotation déterminée présentant un côté extrados et un côté intrados, et comportant, comme connu par US-A-5 443 365:
- un pied au moyen duquel l'aube est fixée à un moyeu de la soufflante,
- une pale fixée au pied et s'étendant radialement par rapport à l'axe de rotation avec une courbure et une section évolutives déterminées sur toute sa longueur et définies par une face extrados plutôt convexe et une face intrados plutôt concave se rejoignant par un bord d'attaque et un bord de fuite, et
- une plateforme entre le pied et la pale, plus large du côté extrados que du côté intrados pour que, en cas de rupture, une des aubes percute l'aube suivante à une plus faible hauteur que si la plateforme était centrée par rapport à l'aube.

Selon l'invention, une partie bombée, proéminente, est prévue sur le côté extrados de la plate-forme les faces intrados, et extrados de la pale présentant une section épaisse à la base de la pale, à l'endroit où peut se produire un éventuel choc entre deux aubes adjacentes, pour que, en cas de rupture elle percute l'aube suivante entre les bords d'attaque et de fuite de cette aube suivante à un endroit où la section de la pale est importante, et pour qu'elle puisse résister à l'éventuel impact de l'aube précédente sur cette même section.

### LISTE DES FIGURES

L'invention et ses différentes caractéristiques techniques seront mieux comprises à la lecture de la description qui est accompagnée de quelques figures représentant respectivement :
- figures 1A et 1B, de schémas relatifs à une aube selon l'art antérieur ;
- figures 2A et 2B, de schémas relatifs à une aube selon l'invention ;
- figures 3A et 3B, deux schémas explicatifs relatifs à la position de la plateforme de l'aube selon l'invention ;
- figures 4A, 4B et 4C, des schémas relatifs à la position de la plateforme de l'aube selon l'invention, et ;
- figure 5, une aube selon l'invention.

### DESCRIPTION DETAILLEE D'UNE REALISATION DE L'INVENTION

La comparaison des figures lA et 1B avec les figures 2A et 2B permet de comprendre rapidement la nouveauté dans l'aube à plateforme selon l'invention.

En effet, la figure 2A montre, en vue de dessus et coupée au niveau de la base de sa pale, l'aube à plateforme selon l'invention. On constate en tout premier lieu que la plateforme 11 a une forme incurvée des deux côtés. Le sens de cette incurvation est en concordance avec l'incurvation de la pale 12 de la même aube. On note que la face extrados 13 de la plateforme 11 comporte donc une bosse ou une partie bombée 13B constituant l'incurvation en question. De manière correspondante, la face intrados de la plateforme 11 est également incurvée dans le même sens.

En référence à la figure 2B, on a représenté en traits mixtes cette même aube 15B s'étant détachée et venant frapper l'aube suivante 15A. Compte tenu du fait de la forme bombée de la plateforme 11, notamment par sa partie bombée 13B de la face extrados 13, le point d'impact de la première aube 15B qui s'est détachée sur la deuxième aube 15A est reporté vers le centre de la pale 17 de la deuxième aube, comme l'indique la croix en trait fort. On constate qu'à cette hauteur où se produit l'impact, c'est-à-dire à la base de la pale 17, la section de la pale 17 est relativement importante. Cette section est obtenue par combinaison des faces extrados 18 et intrados 19 de la pale à cette hauteur. Sur cette figure 2B, on constate que le profil de la pale évolue le long de la longueur de celle-ci. Ainsi, le point d'impact représenté par la croix en trait fort se trouvant sur la face intrados de la pale ne provoque pas d'amorce de rupture comme cela peut se produire dans le cas d'un choc sur un bord d'attaque.

On note que la première aube 15 qui s'est détachée amorce également un mouvement vers l'extérieur par rapport à l'axe de rotation du rotor. Ceci fait que la plateforme 11 ne va pas percuter la plateforme de la deuxième aube 16 mais la pale 17 sur sa face intrados 19.

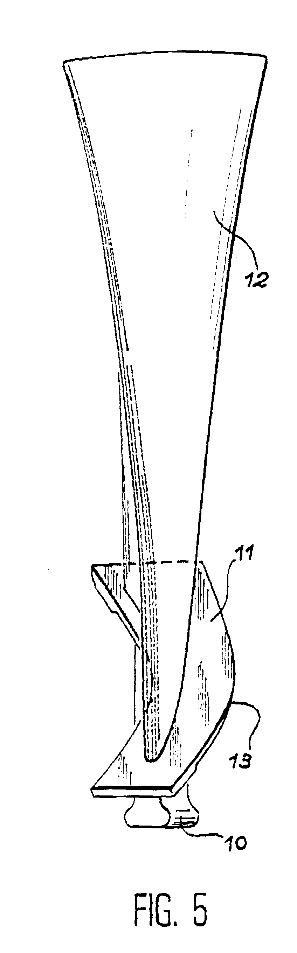

La figure 5 montre en entier une aube à plateforme selon l'invention. On y retrouve donc la pale 12 fixée sur un pied 10 entre lesquels se trouve la plateforme 11. On constate que celle-ci est inclinée pour des questions de montage. On peut également constater que la section de la pale 12 à sa base est relativement épaisse. Ceci est en concordance avec le fait qu'une telle aube peut être percutée au niveau de la base de la pale 12 par l'aube précédente.

Le fait que la section de la pale, à l'endroit où un choc peut avoir lieu avec l'aube précédente, est également dû à la forme de la face intrados de la pale en question. En effet, la face intrados 19 (figure 2B) est relativement peu incurvée. Cela favorise également le report du point d'impact vers le centre de la pale, l'écartant ainsi du bord d'attaque 19A.

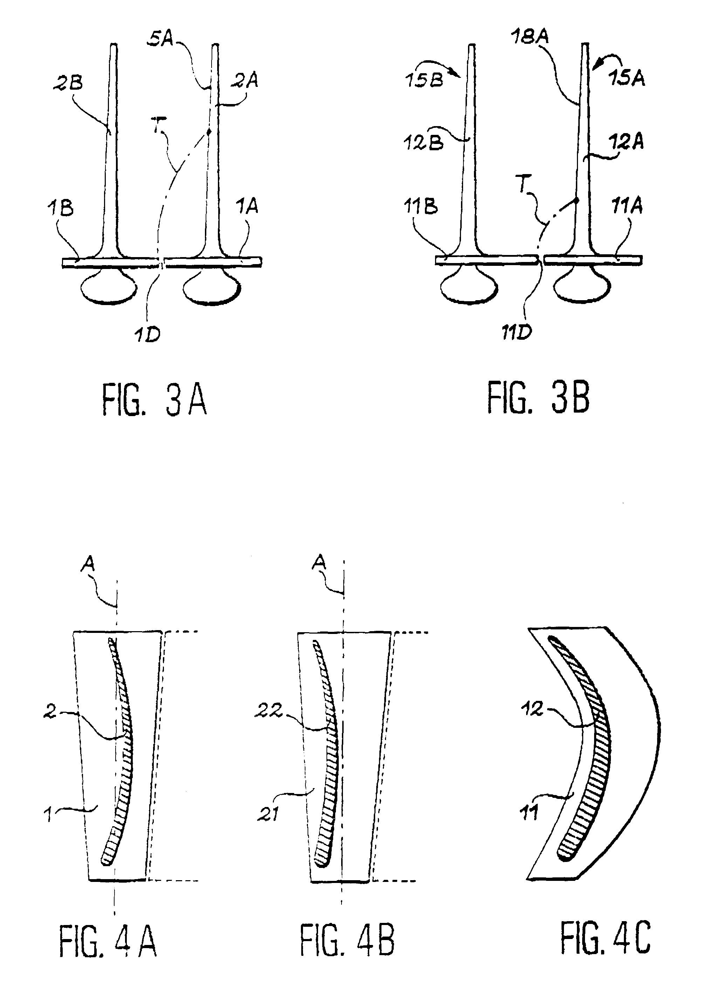

Sur la figure 3B, on remarque que la pale 12 est placée sur la plateforme 11 plutôt du côté gauche, c'est-à-dire du côté intrados. Ceci est voulu. En effet, en se reportant à la figure 3A, en coupe frontale, relative à une aube selon l'art antérieur, on constate que les plateformes 1A et 1B sont centrées par rapport aux pales 2A et 2B. En d'autres termes, elles dépassent de chaque côté de la même distance.

Par contre, sur la figure 3B, en coupe frontale, relative à deux aubes selon l'invention, les plateformes 11A et 11B sont décalées vers la droite, par rapport aux pales 12A et 12B. En d'autres termes, l'extrémité droite 11D de la plateforme llB de l'aube de gauche 15B est un peu plus proche de la pale 12A de l'aube de droite 15A.

L'explication en est la suivante. On a schématisée sur la figure 3A par une trajectoire repérée T le trajet de l'extrémité gauche de la plateforme 1B de l'aube de gauche en cas de rupture de celle-ci par son pied ou de détachement de celle-ci. La force centrifuge due à la grande vitesse de rotation de l'ensemble et la rotation de cet ensemble donnent à cette trajectoire T une courbe parabolique schématisée par des traits interrompus. La plateforme 1B et la pale 2B s'élèvent vers la droite selon cette trajectoire T. L'extrémité droite 1D de la plateforme 1B va donc suivre cette trajectoire et venir percuter le côté extrados 5A de la pale 2A à une hauteur relativement conséquente. L'énergie alors absorbée par l'aube détachée peut être souvent suffisante pour provoquer sa rupture lors de ce choc.

En référence à la figure 3B, on constate que les plateformes 11A et 11B ne sont pas centrées par rapport aux pales 12A et 12B mais sont déplacées vers la droite. Ceci provoque un agrandissement des plateformes 11B vers la droite et une diminution vers la gauche. Ainsi, en cas de rupture de l'aube de gauche 15B dans les mêmes conditions que celles de la figure 3A, cette aube de gauche 15B va s'élever radialement selon la trajectoire T représentée en traits interrompus. Comme la plateforme 11A de l'aube de droite 15A est plus courte du côté gauche et que l'extrémité droite 11D de la plateforme de gauche 11B est donc plus proche de la pale de droite 12A, la rencontre des deux aubes sera plus rapide et le point d'impact beaucoup moins élevé.

Ceci a pour conséquence que la quantité d'énergie cinétique emmagasinée par l'aube détachée est beaucoup plus faible puisque les vitesses radiale et circonférentielle que cette aube a atteint sont plus réduites. La probabilité de rupture de l'aube adjacente est donc beaucoup plus réduite également.

De plus, le point d'impact a lieu plus près de l'encastrement de la pale vers la plateforme. Compte tenu du fait que la section de la pale y est plus importante, le moment de flexion de cette dernière est plus faible et donc les contraintes mécaniques le sont également. Tous ces conséquences font décroître la probabilité de rupture de l'aube adjacente en cas de rupture d'une des aubes.

La figure 4A montre en vue de dessus et en coupe une aube selon l'art antérieur. On remarque que la pale 2 est centrée sur la plateforme 1, c'est-à-dire qu'elle est positionnée selon un axe A partageant la plateforme 2 en deux parties relativement égales.

En se reportant à la figure 4B, si on déplace vers la gauche la pale 22 d'une aube par rapport à sa plateforme 21, c'est-à-dire si on la déplace à gauche de l'axe A, la plateforme 21 aura une partie gauche beaucoup plus restreinte et une partie droite agrandie.

En référence à la figure 4C, représentant la pale selon l'invention telle qu'elle est déjà représentée à la figure 2A, on constate que la pale 12 est placée sur le côté gauche de la plateforme 11 comme suggérée par la figure 3B. De cette manière, on obtient le résultat représenté à la figure 3B qui est un point d'impact éventuel placé près de la plateforme de l'aube adjacente rencontrée lors du détachement d'une aube.

L'augmentation de la section d'une pale d'une aube de rotor de turbomachine implique la modification de la forme de la pale et donc une modification de ses caractéristiques aérodynamiques et de son rendement. Les formes initiales des pales étaient prévues pour doter ces dernières d'un rendement maximal. On pourrait donc penser que la modification de la section d'une pale engendrant une légère modification de la forme de la pale et notamment de la face intrados modifie le rendement aérodynamique de l'aube en abaissant ce dernier. Des mesures et des essais ont montré que ceci n'est pas le cas et que le rendement dynamique d'une aube modifiée selon l'invention est équivalent au rendement des aubes précédentes, ce qui pourrait paraître surprenant. Bien entendu ceci n'engendre donc pas d'inconvénients supplémentaires aux aubes selon l'invention.

## Revendications

1. Aube mobile de rotor de soufflante d'axe de rotation déterminé, comportant un côté extrados et un côté intrados, comprenant :
- un pied (10) au moyen duquel l'aube est fixée sur un moyeu de la soufflante,
- une pale (12) fixée au pied (10) s'étendant radialement par rapport à l'axe de rotation de la machine avec une courbure et une section déterminées et évolutives sur toute la longueur de la pale et définie par une face extrados (18, 18A) plutôt convexe et une face intrados (19) plutôt concave se rejoignant par un bord d'attaque (19A), et
- une plateforme (11) entre le pied (10) et la pale (12), plus large du côté extrados que du côté intrados pour que en cas de rupture, une des aubes (15B) percute l'aube suivante (15A) à une plus faible hauteur que si la plateforme (1) était centrée par rapport à l'aube (2),
caractérisée en ce qu'elle comprend une partie bombée (13) proéminente sur le côté extrados de la plate-forme (11) et en ce que les faces extrados (18, 18A) et intrados (19) de chaque pale (12) sont telles que la section de ces pales est épaisse à la base de la pale, à l'endroit d'un éventuel choc entre deux aubes adjacentes (15A, 15B), pour que, en cas de rupture, une des aubes (15B) percute l'aube suivante (15A) entre les bords d'attaque (19A) et les bords de fuite et qu'elle résiste à un éventuel impact d'une aube précédente au niveau de cette même section.

## Patentansprüche

1. Gebläserotorschaufel mit bestimmter Rotationsachse, die eine Saugseite und eine Druckseite aufweist, bestehend aus:
- einem Fuß (10), mit dem die Schaufel an einer Nabe des Gebläses befestigt wird,
- einem an dem Fuß (10) befestigten Blatt (12), das sich mit einer bestimmten Krümmung und einem bestimmten Querschnitt, die sich über die gesamte Länge des Blatts entwickeln, radial zur Rotationsachse der Triebwerks erstreckt und von einer eher konvexen Saugseite (18, 18A) und einer eher konkaven Druckseite (19), die sich an einer Vorderkante (19A) treffen, umgrenzt wird, und
- einer Plattform (11) zwischen dem Fuß (10) und dem Blatt (12), die auf der Saugseite breiter ist als auf der Druckseite, damit bei einem Bruch eine der Schaufeln (15B) in einer geringeren Höhe auf die nächste Schaufel (15A) trifft als bei einer Plattform (1), die zur Schaufel (2) zentriert ist,
**dadurch gekennzeichnet,**
**daß** sie einen gewölbten Teil (13) aufweist, der an der Saugseite der Plattform (11) hervorsteht, und daß die Saugseite (18, 18A) und die Druckseite (19) jedes Blatts (12) dergestalt ausgeführt sind, daß der Querschnitt dieser Blätter an der Basis des Blatts, an der Stelle eines eventuellen Stoßes zwischen zwei benachbarten Schaufeln (15A, 15B), dick ist, damit bei einem Bruch eine der Schaufeln (15B) die nächste Schaufel (15A) zwischen den Vorderkanten (19A) und den Hinterkanten trifft und einem eventuellen Aufschlag einer vor ihr angeordneten Schaufel in der Höhe dieses Querschnitts standhält.

## Claims

1. Fan rotor blade of given axis of rotation, having a suction face side and a pressure face side, comprising:
- a root (10) by means of which the blade is fixed to a hub of the fan,
- an aerofoil (12) fixed to the root (10) and stretching radially with respect to the axis of rotation of the machine with a determined curvature and cross section which change over the entire length of the aerofoil, which aerofoil is defined by a somewhat convex suction face (18, 18A) and a somewhat concave pressure face (19) which meet at a leading edge (19A) and
- a platform (11) between the root (10) and the aerofoil (12), which platform is broader on the suction face side than it is on the pressure face side so that in the event of breakage, one of the blades (15B) strikes the next blade (15A) at a lower height than it would if the platform (1) were centred with respect to the blade (2),
characterized in that this blade comprises a protruding domed part (13) on the suction face side of the platform (11), and in that the suction face (18, 18A) and pressure face (19) of each aerofoil (12) are such that the cross section of these aerofoils is thick at the base of the aerofoil, at the point where two adjacent blades (15A, 15B) may strike one another, so that in the event of breakage, one of the blades (15B) strikes the next blade (15A) between the leading edges (19A) and the trailing edges and so that it withstands any possible impact from a preceding blade in the region of this very cross section.
